Europäisches Patentamt

European Patent Office

Office européen des brevets

(19)

(11) EP 0 783 201 B1

(12) FASCICULE DE BREVET EUROPEEN

(45) Date de publication et mention
de la délivrance du brevet:
**15.03.2000 Bulletin 2000/11**

(51) Int Cl.⁷: **H02K 1/16**, H02P 7/628,
H02P 7/63, H02P 6/08

(21) Numéro de dépôt: **96402926.8**

(22) Date de dépôt: **31.12.1996**

(54) **Moteur électrique de type synchrone à aimants permanents et véhicule comportant un tel moteur**

Elektromotor des Synchrontyps mit Permanentmagneten und mit einem solchen Motor ausgestattetes Fahrzeug

Synchronous type electric motor and vehicle equipped with such a motor

(84) Etats contractants désignés:
**DE FR IT**

(30) Priorité: **04.01.1996 FR 9600044**

(43) Date de publication de la demande:
**09.07.1997 Bulletin 1997/28**

(73) Titulaire: **THOMSON-CSF**
**75008 Paris (FR)**

(72) Inventeur: **Biais, François, Thomson-CSF, SCPI**
**94117 Arcueil Cedex (FR)**

(74) Mandataire: **Simonnet, Christine et al**
**Thomson-CSF Propriété Intellectuelle,**
**13, Avenue du Président Salvador Allende**
**94117 Arcueil Cédex (FR)**

(56) Documents cités:
FR-A- 2 664 837      US-A- 4 814 677
US-A- 5 168 204

• **PATENT ABSTRACTS OF JAPAN vol. 7, no. 255 (E-210), 12 Novembre 1983 & JP 58 141656 A (TOKYO SHIBAURA DENKI KK), 23 Août 1983,**
• **IEEE TRANSACTIONS ON INDUSTRY APPLICATIONS, vol. 26, no. 1, Janvier 1990 - Février 1990, NEW YORK, US, pages 143-150, XP002015196 SALMON ET AL.: "A Split-Wound Induction Motor Design to Improve the Reliability of PWM Inverter Drives"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention est relative à un véhicule à moteur électrique de traction et à un moteur électrique.

Elle concerne plus particulièrement un véhicule tirant son énergie d'une batterie d'accumulateurs alimentant le moteur de traction par l'intermédiaire d'un onduleur, ce moteur électrique étant du type synchrone à aimants permanents.

Un tel système de traction répond en général aux exigences imposées pour la réalisation d'une voiture électrique de grande diffusion, à savoir : un coût modéré, un poids et des dimensions réduits et un rendement optimum.

On rappelle ici qu'un moteur synchrone à aimants permanents, tel que décrit par exemple dans le document US-A-4 814 677, comporte, d'une part, un rotor présentant un ou plusieurs aimants permanents et, d'autre part, un stator bobiné comprenant en général trois phases alimentées chacune par un courant alternatif. Les courants de ces trois phases sont déphasés de 120° les uns par rapport aux autres. Ils engendrent un champ tournant qui entraîne la rotation du rotor en synchronisme avec la rotation de ce champ.

Les courants alternatifs des phases du stator sont produits par un onduleur comprenant un nombre de paires d'interrupteurs commandés égal au nombre de phases du stator. Dans chaque paire, les interrupteurs sont en série et chaque paire d'interrupteurs en série est en parallèle sur la batterie d'accumulateurs. Le point commun à deux interrupteurs commandés en série est relié à la phase du stator associée à la paire d'interrupteurs.

La commande des interrupteurs est telle qu'à un instant donné, un seul interrupteur dans chaque paire est conducteur et, en valeur absolue, le courant dans une phase est égal à la somme des intensités des courants dans les deux autres phases (en cas de stator triphasé monté en étoile).

Pour obtenir une variation sinusoïdale des courants dans chaque phase, on divise chaque alternance de ce courant sinusoïdal souhaité en plusieurs séquences de durées égales. Le nombre de séquences est, par exemple, égal à 6. Au cours de chacune des séquences, l'intensité moyenne du courant dans l'interrupteur correspondant, et donc dans la phase associée, présente une valeur constante.

Pour un véhicule électrique, la commande doit, en général, être telle qu'à basse vitesse, par exemple de 0 à 2000 tours/minute, le couple fourni par le moteur soit sensiblement constant de façon à fournir au démarrage un couple important. Ensuite, à vitesse plus élevée, c'est la puissance qui reste constante.

Ces contraintes imposées au moteur entraînent, bien entendu, des contraintes pour l'onduleur et l'électronique de commande. Pour minimiser le coût et l'encombrement de l'onduleur, il est nécessaire de minimiser les contraintes appliquées à ce dernier.

A cet effet, il est préférable que l'onduleur fournisse, dans toute la gamme de fonctionnement à puissance constante du moteur, une tension et un courant sensiblement constants. Cette exigence est incompatible avec les propriétés du moteur synchrone à aimants permanents. En effet, dans un tel moteur, la force électromotrice à vide est proportionnelle à la vitesse de rotation. Ainsi, quand la vitesse de rotation augmente, la force contre-électromotrice du moteur augmente. Il en résulte la nécessité d'augmenter la tension fournie par l'onduleur et donc de diminuer l'intensité du courant fourni (à puissance constante l'intensité du courant diminue quand la tension augmente).

Pour résoudre cette contradiction, les interrupteurs de l'onduleur sont commandés de façon telle que, lorsque le moteur est alimenté à puissance constante, la tension d'alimentation est maintenue sensiblement constante par le réglage, par rapport à la position du rotor, de la phase des intensités des courants statoriques.

Étant donné que la tension d'alimentation est la somme vectorielle de la force contre-électromotrice et de la tension aux bornes de l'impédance que constitue le moteur, on comprend que la valeur de cette tension dépend de l'amplitude et, surtout, de la phase du courant traversant l'impédance.

Le comportement du moteur synchrone et de son alimentation peut encore s'expliquer de la manière suivante : le contrôle, ou réglage, de la phase du courant statorique correspond au contrôle, ou réglage, du flux magnétique dans la machine. En effet, le courant présente deux composantes, l'une active permettant d'engendrer le couple, et l'autre défluxante, c'est-à-dire s'opposant directement au flux de l'aimant du rotor. Ainsi, à vitesse élevée, quand la force contre-électromotrice présente une valeur importante, la phase des courants statoriques est réglée de façon à créer une composante défluxante s'opposant à la force contre-électromotrice, ce qui permet de maintenir constante la tension.

L'efficacité du contrôle est d'autant plus importante que l'inductance présentée par le moteur est grande.

Selon l'invention, on confère une valeur importante à cette inductance en conférant une valeur importante à l'inductance de fuite.

La valeur de l'inductance de fuite est, dans le mode de réalisation préféré, au moins de l'ordre de 10%, et de préférence d'au moins 15%, de la valeur de l'inductance utile du moteur. Dans une réalisation, la valeur de l'inductance de fuite est de l'ordre du tiers de la valeur de l'inductance utile.

En plus de sa fonction d'augmentation de l'efficacité du contrôle, l'inductance de fuite de valeur élevée Lf - qui, du point de vue électrique, se trouve en série avec le moteur - constitue un filtre atténuant les courants harmoniques agissant sur le rotor.

De cette manière, on minimise l'échauffement dû aux courants de Foucault engendrés dans les aimants du rotor par les harmoniques (qui engendrent des champs non synchrones). Cet avantage est particulièrement appréciable quand on utilise des aimants NeFeB qui risquent de se désaimanter lorsqu'ils sont chauffés à une température proche de 180°C.

Dans un mode de réalisation préféré, on réalise une inductance de fuite de valeur élevée grâce à la configuration des encoches du stator qui logent les bobinages.

Dans le document JP-A-5 814 1656 il est décrit un moteur asynchrone dans lequel un coin en matériau magnétique conducteur a été inséré dans une fente d'encoche statorique pour augmenter le flux magnétique de fuite de manière à réduire bruit et vibration.

Ces encoches débouchent dans l'entrefer et présentent, à cet endroit, un étranglement ayant une hauteur h (la hauteur est la dimension en direction radiale, depuis l'entrefer vers le fond de l'encoche) et une largeur b (dimension en direction tangentielle) qui déterminent la valeur de l'inductance de fuite. On sait, en effet, que cette inductance de fuite est proportionnelle à h/b. De préférence, le rapport h/b est supérieur à 0,5.

Dans un exemple ce rapport h/b est de l'ordre de 0,9.

Il est préférable que la largeur b de l'encoche ait une valeur faible afin d'obtenir une diminution des courants induits en surface du rotor et donc une diminution des échauffements superficiels de l'aimant de ce rotor.

D'autres avantages de l'invention apparaîtront avec la description de l'un de ses modes de réalisation, celle-ci étant effectuée en se référant aux dessins ci-annexés, sur lesquels :

la figure 1 est un schéma : d'un moteur électrique synchrone, d'un onduleur et de circuits de commande associés,

la figure 2 est un diagramme correspondant au fonctionnement du dispositif de la figure 1,

les figures 3 et 4 sont des diagrammes se rapportant au moteur de la figure 1,

la figure 5 correspond à un schéma électrique du moteur de la figure 1,

la figure 6 est un diagramme de fonctionnement du dispositif selon l'invention,

la figure 7 est un schéma d'une partie du stator du moteur selon l'invention,

la figure 8 est une vue agrandie d'une partie de la figure 7, et

les figures 9 et 10 sont d'autres diagrammes montrant le fonctionnement du dispositif selon l'invention.

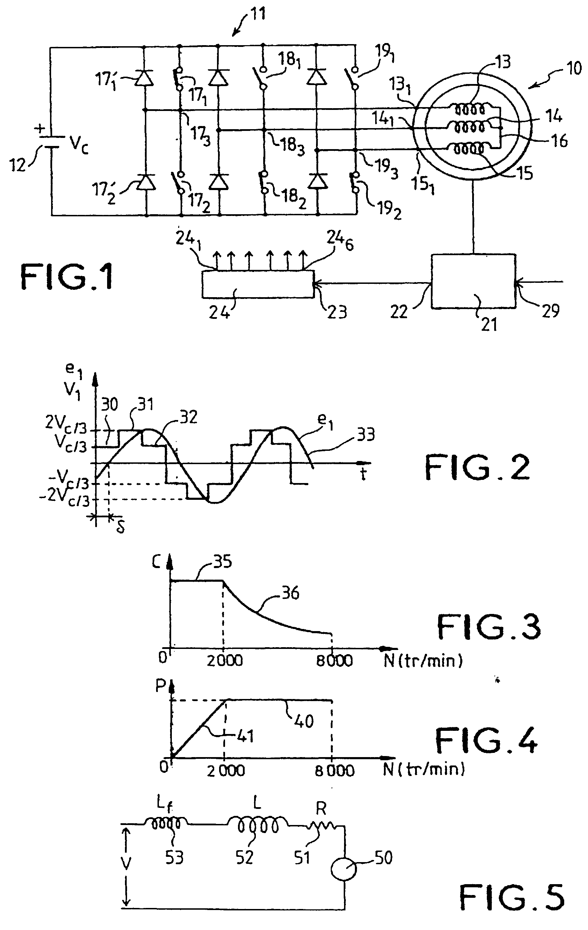

L'ensemble d'un moteur électrique synchrone 10 (figure 1) et d'un onduleur de tension 11, que l'on va décrire en relation avec les figures, est destiné à la traction d'un véhicule de type "voiture électrique" alimenté par une batterie d'accumulateurs 12.

Le moteur 10 de type synchrone comprend, de façon classique, un rotor à aimants permanents (non représenté sur la figure 1) et un stator triphasé présentant trois bobinages ou phases, respectivement 13, 14 et 15. Dans cet exemple, les phases 13, 14, 15 sont branchées en étoile, c'est-à-dire qu'elles comportent toutes les trois une borne commune 16.

Ces phases 13, 14 et 15 sont alimentées en courant alternatif grâce à l'onduleur 11. Le rôle de l'onduleur est de fournir aux trois phases 13, 14 et 15 des courants alternatifs présentant les uns par rapport aux autres un déphasage de 120°. C'est cette alimentation en courant alternatif et ces déphasages qui permettent d'engendrer un champ magnétique tournant provoquant la rotation du rotor.

L'onduleur de tension 11 comporte, de façon en soi connue, six interrupteurs commandés disposés selon trois paires, respectivement $17_1$, $17_2$ ; $18_1$,$18_2$ ; $19_1$,$19_2$. Dans chacune de ces paires les deux interrupteurs, $17_1$,$17_2$, par exemple, sont en série. La borne commune $17_3$ aux interrupteurs $17_1$,$17_2$ d'une paire en série, est connectée à la borne $13_1$ de la phase correspondante 13 qui est opposée à la borne 16. De même, les bornes $18_3$ et $19_3$ sont connectées, respectivement, aux bornes $14_1$ et $15_1$ des phases 14 et 15.

Une diode $17'_1$, $17'_2$, etc. est branchée en parallèle sur chacun des interrupteurs $17_1$, $17_2$, etc.

Un circuit 21 à capteur fournit à chaque instant un signal indiquant la position du rotor par rapport au stator. Par exemple, le capteur du circuit 21 produit à chaque tour six impulsions telles que deux impulsions successives correspondent à des positions séparées angulairement de 60°. La sortie 22 du circuit 21 est reliée à l'entrée 23 d'un circuit de commande 24 des interrupteurs 17, 18, 19. On voit ainsi que le dispositif 24 comporte six sorties $24_1$ à $24_6$ affectées à la commande de chaque interrupteur. Par exemple, la sortie $24_1$ commande la conduction de l'interrupteur $17_1$.

Dans l'exemple, les interrupteurs 17, 18 et 19 sont des transistors de puissance. En variante, ces interrupteurs sont des thyristors associés à des circuits de commutation forcée ou des thyristors GTO (thyristors ouvrables par la gâchette).

La figure 2 est un diagramme sur lequel le temps t a été porté en abscisses et, en ordonnées, on a représenté, d'une part, la tension $V_1$ aux bornes de la phase 13 du stator du moteur 10 et, d'autre part, la force contre-électromotrice $e_1$ du moteur 10 pour cette même phase 13.

La commande des interrupteurs est telle qu'à chaque instant, dans chaque paire, un seul interrupteur est fermé, et la répartition des trois interrupteurs fermés est telle qu'un seul d'entre eux est relié directement à la borne positive de la batterie 12 tandis que les deux autres interrupteurs sont connectés à la borne négative de cette même batterie. Dans l'exemple représenté sur la figure 1, ce sont les interrupteurs $17_1$, $18_2$ et $19_2$ qui

sont fermés. Dans ces conditions, l'intensité du courant circulant dans la phase 13 est égale à la somme des intensités des courants circulant dans chacune des phases 14 et 15.

Ainsi, la tension $V_1$ aux bornes de chacune des phases, par exemple celle de référence 13, prend alternativement les valeurs $V_c/3$, $2V_c/3$, $-V_c/3$ et $-2V_c/3$ selon la séquence de fermeture des interrupteurs.

Cette séquence de fermeture des interrupteurs est telle qu'elle engendre les tensions alternatives désirées aux bornes de chaque phase 13, 14, 15. A cet effet, chaque demie alternance comprend trois paliers. Par exemple, la première demie alternance du signal $V_1$ (figure 2) comprend un premier palier 30 de tension $V_c/3$, un second palier 31 de tension $2V_c/3$ et un troisième palier 32 de tension $V_c/3$.

Quand on veut moduler, c'est-à-dire faire varier, la tension aux bornes des bobinages du stator du moteur, on engendre chaque palier à partir d'une modulation à largeur d'impulsion MLI (non représentée). Une telle modulation consiste à commander à haute fréquence la conduction de chaque interrupteur. Au cours de chacune des périodes de découpage, de durée T, l'interrupteur correspondant est conducteur pendant une durée t qui est fonction de l'intensité (ou tension) désirée. En d'autres termes, c'est le rapport cyclique t/T qui détermine l'intensité du courant qui traversera le bobinage correspondant.

Par ailleurs, on voit sur la figure 2 que la force contre-électromotrice $e_1$, représentée par la courbe sinusoïdale 33, est déphasée d'une valeur $\delta$ par rapport à la tension $V_1$. Cette valeur $\delta$ est contrôlable par un signal appliqué sur une entrée 29 du circuit 21.

La commande du moteur 10 est telle que ce dernier garde en permanence le synchronisme, c'est-à-dire que la vitesse du champ tournant est constamment adaptée, grâce au capteur du circuit 21, à la vitesse de rotation du rotor.

Le moteur 10 étant destiné à la traction d'un véhicule électrique, il doit présenter au démarrage un couple C de valeur maximale qui doit se maintenir jusqu'à une vitesse déterminée. Dans l'exemple représenté par le diagramme de la figure 3, sur lequel on a porté en abscisses la vitesse N de rotation du moteur, en tours par minute, et en ordonnées, le couple C du moteur, le couple C est constant pour des vitesses comprises entre 0 et 2000 tours par minute. Cette caractéristique est représentée par le segment de droite 35. Ensuite, pour des vitesses supérieures à 2000 tours par minute, le couple diminue, comme représenté par la courbe 36 sur la figure 3.

Par contre, pour les vitesses supérieures à 2000 tours par minute, la puissance P du moteur est maintenue à une valeur constante. Cette caractéristique est représentée par le segment de droite 40 sur la figure 4. Pour les vitesses de démarrage comprises entre 0 et 2000 tours par minute, la puissance est proportionnelle à la vitesse de rotation, comme représenté par le segment de droite 41 sur la figure 4.

Pour obtenir ces caractéristiques, entre 0 et 2000 tours par minute, la modulation à largeur d'impulsion mentionnée ci-dessus est telle que le rapport cyclique varie d'une valeur minimale, par exemple 1/2, à une valeur maximale, par exemple 1, et ensuite, c'est-à-dire pour des vitesses supérieures à 2000 tours par minute, le rapport cyclique reste constant à sa valeur maximale. Si la valeur maximale est 1, la modulation à largeur d'impulsion n'intervient plus car le courant circule en permanence à chaque palier dans l'interrupteur correspondant.

Pour optimiser le dimensionnement de l'onduleur 11, afin d'en minimiser son coût, il est préférable que cet onduleur fournisse des amplitudes de tensions et des intensités de courants sensiblement constantes quand la vitesse varie.

Mais cette contrainte est incompatible avec le fonctionnement à puissance constante (segment 40 sur la figure 4). En effet, la tension fournie par l'onduleur 11 doit notamment s'opposer à la force contre-électromotrice du moteur 10 et cette dernière est proportionnelle à la vitesse de rotation. Il en résulte que, lorsque la vitesse augmente, la tension fournie par l'onduleur doit augmenter et, la puissance étant constante, l'intensité du courant doit diminuer.

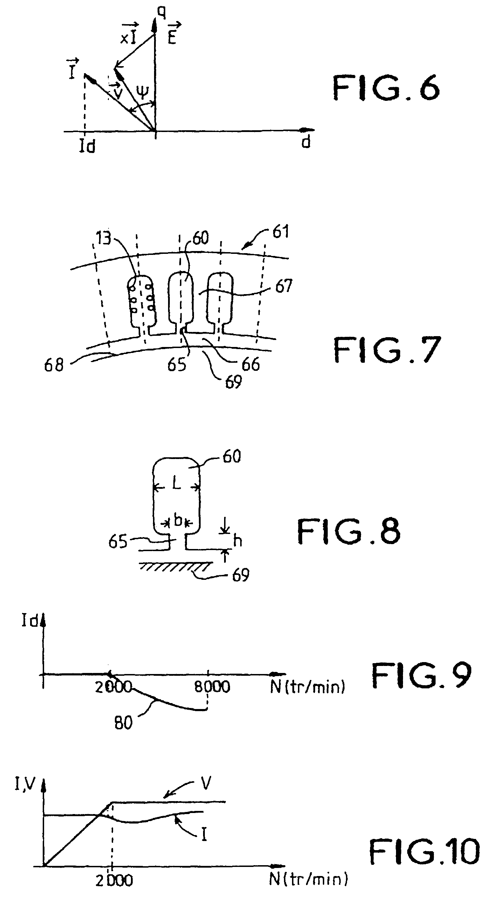

Pour maintenir sensiblement constantes l'amplitude de la tension et l'intensité du courant fournis par l'onduleur, on commande la phase du courant dans les bobinages du stator de façon à produire un flux magnétique s'opposant au flux de l'aimant. Les figures 5 et 6 permettront de mieux comprendre cette disposition.

La figure 5 est un schéma électrique correspondant au moteur. L'élément 50 représente le moteur aux bornes duquel apparaît la force contre-électromotrice e. L'élément 51 est sa résistance interne, l'élément 52 est son inductance propre et l'élément 53, l'inductance de fuite.

La tension $\vec{V}$ aux bornes du moteur obéit ainsi à l'équation suivante :

$$(1) \qquad \vec{V} = \vec{E} + X\vec{I} = \vec{E} + (R + jL\omega + jL_f\omega)\vec{I}$$

Dans cette formule, $\vec{V}$ est la tension fournie au moteur, $\vec{E}$ est sa force contre-électromotrice, $\vec{I}$ est le courant, X l'impédance, R, L et $L_f$ les valeurs des éléments respectivement 51, 52 et 53, $\omega = 2\pi f$, f étant la fréquence du courant alternatif, et j est un nombre imaginaire tel que $j^2 = -1$.

La résistance interne du moteur est, en général, négligeable par rapport aux autres éléments constituant l'impédance. Ainsi, l'impédance est, dans la pratique, uniquement de nature inductive.

La formule (1) est représentée par le diagramme vectoriel de la figure 6, sur lequel l'axe d représente l'axe magnétique du rotor et l'axe perpendiculaire représente la direction q dite "en quadrature". A chaque instant, le champ électrique E, et donc la force contre-électromotrice, est perpendiculaire à l'axe des aimants. Le courant $\vec{I}$ présente un déphasage ψ par rapport à l'axe q, et la composante $X\vec{I}$, qui est inductive, est perpendiculaire au vecteur courant $\vec{I}$.

La composante Id du vecteur courant $\vec{I}$ sur l'axe d engendre un champ défluxant tandis que la composante de ce vecteur courant sur l'axe q engendre une composante active, génératrice du couple.

La composante Id sur l'axe d produit donc un flux qui s'oppose au flux de l'aimant et qui induit une tension qui s'oppose à la force contre-électromotrice. Bien entendu, cette composante Id varie avec l'angle ψ.

Ainsi, on prévoit une régulation pour maintenir sensiblement constante l'intensité I du courant et l'amplitude V de la tension, dans laquelle le paramètre régulant est le déphasage ψ du courant.

Bien que le courant défluxant soit utile pour contrôler la machine, on a cependant intérêt à le minimiser afin d'optimiser le rendement.

Pour cette optimisation, on peut maximiser l'inductance du moteur car, pour un même produit $X\vec{I}$, l'intensité défluxante du courant $\vec{I}$ diminue quand X augmente.

Selon l'invention, pour conférer une valeur plus importante à l'inductance du moteur, on configure ce dernier de manière que son inductance de fuite soit élevée par rapport à son inductance principale. Cette inductance de fuite est de l'ordre d'au moins 10 à 15% de l'inductance principale et de préférence de l'ordre du tiers. On rappelle ici que l'inductance de fuite est l'inductance correspondant au flux de fuite par rapport au rotor, c'est-à-dire au flux qui ne se referme pas par l'entrefer rotor/stator.

L'inductance de fuite d'un moteur synchrone dépend, pour une grande part, de la géométrie des encoches 60 (figure 7) du stator 61. Ces encoches logent les bobinages ou phases 13, 14, 15. Chacune de ces encoches 60 présente une ouverture 65 débouchant dans l'entrefer 66 entre les pôles 67 du stator et la périphérie 68 du rotor 69.

En général, cette ouverture 65 présente une largeur b plus faible que la largeur L principale de l'encoche 60 (figure 8). Par largeur b, on entend la dimension en direction tangentielle au rotor. Cet étranglement s'étend sur une hauteur h relativement faible par rapport à la hauteur totale de l'encoche. Par "hauteur", on entend la dimension en direction radiale.

Les inductances de fuite sont proportionnelles au rapport h/b. Dans un exemple, ce rapport h/b est supérieur à 0,5 et de préférence de l'ordre de 0,9.

La présence d'une inductance de fuite de valeur relativement élevée permet également de réduire d'une manière substantielle les échauffements du rotor dus aux courants de Foucault. On sait que ces courants de Foucault proviennent des harmoniques de champ qui ne sont pas en synchronisme avec la rotation du rotor. Ces harmoniques, qui tirent leur origine de la commande à découpage de l'onduleur, sont atténuées par l'inductance de fuite.

De façon générale, on comprend qu'on a intérêt, pour augmenter l'inductance de fuite, à diminuer la largeur b et à augmenter la hauteur h.

La diminution de la largeur b entraîne un effet supplémentaire favorable: la réduction de l'échauffement superficiel du rotor. En effet, plus la largeur est faible et plus les courants induits, par l'ondulation d'induction, en surface du rotor seront faibles. Cette diminution des échauffements constitue un avantage important, notamment quand on utilise des aimants sensibles à la température tels que des aimants au néodyme, fer et bore NeFeB qui présentent un risque de démagnétisation à partir d'une température de l'ordre de 180° C.

La figure 9 est un diagramme sur lequel on a porté en abscisses la vitesse de rotation N du moteur en tours/minute et en ordonnées, l'intensité défluxante Id. Comme on peut le voir, cette intensité défluxante est nulle de 0 à 2000 tours/minute et présente une valeur négative (courbe 80) pour les vitesses supérieures.

La figure 10 est un diagramme sur lequel, en abscisses, on a porté la vitesse N en tours par minute et, en ordonnées, la tension V et l'intensité I du courant; Sur cette courbe, on voit que la tension V monte de 0 à 2000 tours par minute et reste constante au-delà. L'intensité I du courant traversant le moteur ne reste pas rigoureusement constante, mais ses variations n'imposent pas de contrainte gênante à l'onduleur.

**Revendications**

1. Moteur électrique synchrone à rotor à aimant(s) permanent(s) et à stator bobiné, caractérisé en ce qu'il présente une inductance de fuite (50) dont la valeur ($L_f$) est au minimum de l'ordre de 10%, et de préférence d'au moins 15%, de la valeur de son inductance principale (52) pour le faire travailler dans une gamme de fonctionnement à puissance constante avec une tension d'alimentation sensiblement constante.

2. Moteur selon la revendication 1, caractérisé en ce que l'inductance de fuite est de l'ordre du tiers de l'inductance principale.

3. Moteur selon la revendication 1 ou 2, caractérisé en ce que son stator (61) présente des encoches (60) logeant les bobinages, chacune de ces encoches ayant une ouverture (65) débouchant dans l'entrefer (66) qui est rétrécie sur une hauteur h, le rapport entre cette hauteur h et la largeur b de l'ouverture étant supérieur à 0,5, la hauteur h étant une dimension en direction radiale et la largeur b étant une dimension en direction tangentielle.

4. Moteur selon la revendication 3, caractérisé en ce que ledit rapport h/b est de l'ordre de 0,9.

**5.** Moteur selon l'une quelconque des revendications 1 à 4, caractérisé en ce que le rotor comprend un aimant permanent à base de Néodyme, Fer et Bore.

**6.** Véhicule à moteur électrique de traction (10) de type synchrone présentant un rotor (69) à aimants permanents et un stator (61) bobiné alimenté par des courants alternatifs engendrant un champ tournant, un circuit de commande (21) agissant sur la phase ($\psi$) du courant alternatif du stator, afin que la tension fournie au moteur reste constante quand la puissance fournie à ce moteur est constante, caractérisé en ce que pour optimiser l'efficacité du contrôle par la phase, le moteur présente une inductance de fuite (50) dont la valeur (Lf) est au minimum de l'ordre de 10% et, de préférence, d'au moins 15% de la valeur (L) de son inductance principale (52).

**7.** Véhicule selon la revendication 6, caractérisé en ce que l'alimentation des bobinages du stator est obtenue à l'aide d'un onduleur de tension (11) transformant en courant alternatif polyphasé la tension continue fournie par une batterie (12) d'accumulateurs, les interrupteurs (17, 18, 19) de cet onduleur étant commandés à partir d'un capteur (21) de la position du rotor, la phase ($\psi$) du courant alternatif du stator étant déterminée par rapport au rotor.

**8.** Véhicule selon la revendication 6 ou 7, caractérisé en ce qu'au démarrage, et jusqu'à une vitesse de rotation déterminée, le couple est constant (35) et au-delà de ladite vitesse déterminée, la puissance est constante (40).

**9.** Véhicule selon la revendication 8, caractérisé en ce que ladite vitesse déterminée est de l'ordre de 2000 tours par minute.

**10.** Véhicule selon la revendication 7, caractérisé en ce que la commande des interrupteurs de l'onduleur est telle que la fréquence des courants alternatifs alimentant le moteur soit adaptée au fonctionnement de ce dernier afin qu'il conserve en permanence le synchronisme.

**11.** Véhicule selon la revendication 6, caractérisé en que les interrupteurs commandés (17, 18, 19) sont des transistors ou des thyristors.

**Patentansprüche**

**1.** Elektrischer Synchronmotor, dessen Rotor mindestens einen Dauermagnet enthält und dessen Stator Wicklungen trägt, dadurch gekennzeichnet, daß er eine Leckinduktivität (50) besitzt, deren Wert ($L_f$)

mindestens 10% und vorzugsweise mindestens 15% des Werts der Hauptinduktivität (52) beträgt, damit der Motor in einem Betriebsbereich bei konstanter Leistung mit einer im wesentlichen konstanten Speisespannung arbeiten kann.

**2.** Motor nach Anspruch 1, dadurch gekennzeichnet, daß der Wert der Leckinduktivität etwa ein Drittel des Werts der Hauptinduktivität bildet.

**3.** Motor nach Anspruch 1 oder 2, dadurch gekennzeichnet, daß der Stator (61) Nuten (60) zur Aufnahme der Spulen enthält, wobei jede dieser Nuten eine in den Luftspalt (66) mündende Öffnung (65) besitzt, die über eine Höhe h eine verringerte Breite besitzt, wobei das Verhältnis zwischen dieser Höhe h und der Breite b der Öffnung größer als 0,5 ist und die Höhe in radialer Richtung und die Breite b in tangentialer Richtung gemessen wird.

**4.** Motor nach Anspruch 3, dadurch gekennzeichnet, daß das Verhältnis h/b etwa 0,9 beträgt.

**5.** Motor nach einem beliebigen der Ansprüche 1 bis 4, dadurch gekennzeichnet, daß der Rotor einen Dauermagneten auf der Basis von Neodym-Eisen-Bor besitzt.

**6.** Fahrzeug mit einem elektrischen Antriebsmotor (10) vom Synchrontyp, der einen Rotor (69) mit Dauermagneten und einen Stator (61) mit Wicklungen enthält, die mit ein Drehfeld erzeugenden Wechselströmen gespeist werden, wobei eine Steuerschaltung (21) auf die Phase ($\psi$) des Wechselstroms des Stators einwirkt, um die dem Motor gelieferte Spannung konstantzuhalten, wenn die dem Motor gelieferte Leistung konstant ist, dadurch gekennzeichnet, daß zur Optimierung des Wirkungsgrads der Steuerung über die Phase der Motor eine Leckinduktivität (50) besitzt, deren Wert ($L_f$) mindestens etwa 10% und vorzugsweise mindestens 15% des Werts (L) der Hauptinduktivität (52) beträgt.

**7.** Fahrzeug nach Anspruch 6, dadurch gekennzeichnet, daß die Speisung der Spulen des Stators mithilfe eines Spannungswechselrichters (11) erfolgt, der die von einer Akkumulatorenbatterie (12) gelieferte Gleichspannung in mehrphasige Wechselströme umwandelt, wobei die Schalter (17, 18, 19) des Wechselrichters ausgehend von einer Sonde (21) zur Erfassung der Drehstellung des Rotors gesteuert werden und die Phase ($\psi$) des Wechselstroms des Stators bezüglich des Rotors bestimmt wird.

**8.** Fahrzeug nach Anspruch 6 oder 7, dadurch gekennzeichnet, daß beim Anfahren und bis zu einer bestimmten Drehgeschwindigkeit das Drehmoment konstant gehalten wird (35), während jenseits der bestimmten Geschwindigkeit die Leistung konstant gehalten wird (40).

9. Fahrzeug nach Anspruch 8, dadurch gekennzeichnet, daß die bestimmte Geschwindigkeit bei etwa 2000 U/min liegt.

10. Fahrzeug nach Anspruch 7, dadurch gekennzeichnet, daß die Steuerung der Schalter des Wechselrichters so gewählt ist, daß die Frequenz der Wechselströme, die den Motor speisen, an den Betrieb des Motors angepaßt ist, sodaß er permanent synchron bleibt.

11. Fahrzeug nach Anspruch 6, dadurch gekennzeichnet, daß die gesteuerten Schalter (17, 18, 19) Transistoren oder Thyristoren sind.

**Claims**

1. Synchronous electric motor comprising a rotor of one or more permanent magnets and a wound stator, characterised in that it has a leakage inductance (50) with a minimum value ($L_f$) of about 10%, and preferably not less than 15%, of the value of its effective inductance (52), in order to run it in an operating range at constant power with a substantially constant supply voltage.

2. Motor according to claim 1, characterised in that the leakage inductance is about one third of the effective inductance.

3. Motor according to claim 1 or 2, characterised in that its stator (61) has slots (60) which house the windings, each of these slots having an opening (65) into the air gap (66) which is narrowed over a height h, the ratio between this height h and the width b of the opening being greater than 0.5, the height h being a dimension in the radial direction and the width b being a dimension in the tangential direction.

4. Motor according to claim 3, characterised in that said ratio h/b is about 0.9.

5. Motor according to any of claims 1 to 4, characterised in that the rotor includes a neodymium-iron-boron permanent magnet.

6. Vehicle driven by a synchronous-type electric motor (10) having a rotor (69) of permanent magnets and a wound stator (61) fed by alternating currents generating a rotating field, a control circuit (21) controlling the phase (Y) of the alternating current in the stator in order that the voltage supplied to the motor remains constant when the power supplied to said motor is constant, characterised in that to optimise the efficiency of the phase control, the motor has a leakage inductance (50) whose value (Lf) is at least approximately 10%, preferably not less than 15%, of the value (L) of its effective inductance (52).

7. Vehicle according to claim 6, characterised in that the power supply of the windings of the stator is provided by means of a voltage undulator (11) which transforms the the d.c. voltage supplied by a bank (12) of accumulators into a multi-phase alternating current, the switches (17, 18, 19) of said undulator being controlled by means of a sensor (21) detecting the position of the rotor, the phase (Y) of the alternating current of the stator being determined relative to the rotor.

8. Vehicle according to claim 6 or 7, characterised in that when starting and up to a determined speed of rotation, the motor torque is constant (35) and, above said determined speed, the motor power is constant (40).

9. Vehicle according to claim 8, characterised in that said determined speed is about 2000 rpm.

10. Vehicle according to claim 7, characterised in that the control of the switches of the undulator is such that the frequency of the alternating currents feeding the motor is adapted to the operation of said motor in order that it conserves its synchronism at all times.

11. Vehicle according to claim 6, characterised in that the controlled switches (17, 18, 19) are transistors or thyristors.

FIG.1

FIG.2

FIG.3

FIG.4

FIG.5

FIG.6

FIG.7

FIG.8

FIG.9

FIG.10